Europäisches Patentamt

European Patent Office

Office européen des brevets

(19)

(11) **EP 1 361 526 A1**

(12) **EUROPEAN PATENT APPLICATION**

(43) Date of publication:
**12.11.2003 Bulletin 2003/46**

(51) Int Cl.[7]: **G06F 17/60**

(21) Application number: **02010474.1**

(22) Date of filing: **08.05.2002**

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **Accenture Global Services GmbH**
**8200 Schaffhausen (CH)**

(72) Inventors:
- **Buttler, Michael, Dr.**
  **10405 Berlin (DE)**
- **Jasic, Teo**
  **65824 Schwalbach (DE)**

(74) Representative: **Liesegang, Eva**
**Forrester & Boehmert,**
**Pettenkoferstrasse 20-22**
**80336 München (DE)**

(54) **Electronic data processing system and method of using an electronic processing system for automatically determining a risk indicator value**

(57) The invention relates to an electronic data processing system for automatically determining a risk indicator value based on a number of risk parameters, for evaluating a risk involved with performing a transaction between a client and a transaction provider in said data processing system, the data processing system comprising: first input means for inputting client input data relating to said client; first data base means for storing said client input data; computing means; output means for outputting said risk indicator value; said first data base means comprising data management means for assembling and storing said client input data in a predetermined number of client input data files in said first data base means; said computing means comprising: first reading means for reading client input data from at least one of said client input data files of said first data base means into said computing means; first calculating means for determining risk parameter values (x) for a number of predefined risk parameters from said client input data; evaluation means for evaluating each risk parameter value using an associated evaluation function to determine an evaluation value of said risk parameter; comparator means for comparing each evaluation value with at least one threshold value to determine whether the associated risk parameter is critical, uncritical, or neutral for the risk involved with performing said transaction; second calculating means for calculating a risk density for each non-neutral risk parameter; aggregating means for aggregating the risk densities of non-neutral risk parameters of at least one predefined set of risk parameters to determine a common risk density of said set of risk parameters; third calculating means for generating an overall risk probability, based on predetermined weights and partial risk probabilities for said sets of risk parameters; fourth calculating means for calculating a net utilisation as the difference between an utilisation in said transaction and a value of collaterals available for said transaction at a certain point in time; and fifth calculating means for calculating said risk indicator value as the product of said net utilisation and said overall risk probability.

EP 1 361 526 A1

**Description**

The invention relates to an electronic data processing system and a method of using an electronic data processing system for automatically determining a risk indicator value based on a number of risk parameters, for evaluating the risk involved with performing a transaction between a client and a transaction provider in said data processing system.

For monitoring and predicting the success of transactions, such as carrying out technical processes having a large number of variable input parameters but also for financial and commercial transactions, early warning risk indicators systems have been developed for estimating a risk involved with performing said process or transaction between the client and the transaction provider.

Such early warning risk indicator systems of the prior art essentially are based on a set of characteristics and attributes of the process/transaction for determining a high, medium or low risk business engagement (e.g. a business engagement, such as a loan application).

Prior art examples of such early warning risk indicator systems are described e.g. in US 6,202,053 B1, US 6,311,169 B2, and the Journal of Commercial Landing, June 1995, pages 10 to 16 "How the RMA/Fair, Isaac Credit-scoring model was build" by Latimer Asch.

US 6,202,053 B1 describes how, to assess the credit risk of an individual, a financial institution will develop a score for each credit applicant based on certain information. The applicant receives points for each item of information analysed by the financial institution. The amount of points awarded for each item, the items actually analysed, and the score necessary for approval may vary. This score awarded is used to evaluate a risk involved in performing a certain transaction. In other words, the decision to approve or deny an applicants request for e.g. a bank card or another type of transaction is based on a scoring system. The scoring system used to evaluate each applicant and the minimum score required for approval was applied uniformly by a financial institution to all its applicants. The use of such a scoring system for evaluating a risk involved with a transaction is rather superficial and could be made more secure by either monitoring the financial behaviour of the approved client after approval or increasing the score required for approval. The first alternative would require an increase in costs and efforts whereas the second alternative might lead to unnecessarily declining a large number of the clients.

Therefore, US 6,202,053 B1 proposes to develop a segmentation tree, building a client's score card for each segment, grouping clients into sub-populations corresponding to each segment, and applying the client's score card to the applicants within the corresponding segment. Using an automated system to implement the generation of the clients score cards and scoring the applications further lowers costs and effort of assessing a risk involved with a transaction.

The general background of the RMA/Fair, Isaac, credit-scoring model is described in the above mentioned article by Latimer Asch. The model is suitable for e.g. reducing the time spent for processing small business loan applications using an automated solution which is based on a pooled-data score card. A scorecard is a tool used to calculate the risk associated with a credit application. It calculates the credit risk based on multiple items of information called characteristics. Characteristics can come from several sources, including the credit application and consumer and business credit reports. Each characteristic is divided into two or more possible responses known as attributes. A numerical score is associated with each attribute, so for any credit application, the numerical attribute values for all characteristics can be added together to provide a total score. Scoring, in principal, uses the same data a loan officer uses in his or her judgmental, or nonscoring, decision process. But scoring is faster, more objective, and more consistent. With the current regulatory pressure to provide more small business loans, prospective lenders need efficient, time-saving, cost-cutting tools. With credit-scoring, a lender can increase the number of approved applications without increasing risk, time, or other resources.

The scoring system described above, although performed automatically in a data processing system and being able to handle a relatively large number of data, has proved to be not very precise and could not determine risks in real time. Some of the problems of the known scoring system are that they are not flexible, they cannot take into account historical data, they are limited in the type of information which is taken into account and they have limited reporting possibility.

It is an objective of the present invention to provide an electronic data processing system and a method of using an electronic data processing system for automatically determining a risk indicator value which is capable of processing a large number of current and historical risk parameters in real time for fast, efficient and reliable determination of a risk indicator value involved with performing a transaction between a client and a transaction provider.

This objective is solved by providing a system according to claim 1 and a method according to claim 10.

The present invention provides a system and a method capable of determining the risk involved with a transaction on the basis of a large number of parameters in the shortest possible time. In particular, it is envisaged to take into account a large number of individual parameters, e.g. typically some 25 to 50 parameters per client and account over a time span of for example 12 to 36 months, i.e. up to 1800 individual parameter values per client which may comprise such data as personal client data, historical account data and/or historical credit data, to determine a risk indicator value involved with performing a transaction for said particular client in the shortest possible time. With the system and the method of the present invention it is possible to determine risk indicator values overnight for a large number of clients, e.g. in the order of two millions, which means that in the order of $1 \cdot 10^9$ individual values have to be calculated.

For explaining the concept of the present invention, first the methodology for determining the risk indicator value is explained in general, then the technical realisation is explained.

The system and method according to the present invention obtain a risk indicator value which is suitable for the identification of high-risk clients and enables an efficient discrimination between high-risk and low-risk clients. For example the method can be applied for the risk assessment of private and corporate clients. The methodology of the risk indicator value is not limited to any specific application but can be applied to any type of financial and commercial transaction as well as technical processes and other applications. The terms "client" and "transaction provider" shall be understood in a broad sense, comprising any entities involved in requesting or initiating and granting or completing a specific transaction or process in which such client and transaction provider participate.

The risk indicator value can be determined not only on a client basis but also for a group of clients or for a local area in which such clients are active.

The risk indicator value is determined on the basis of risk parameter values which are available at a certain date and time as well as past risk parameter values to predict the development of a certain transaction or process for the future as precisely and early as possible.

In the following, the invention is described with reference to a preferred embodiment, by way of example, in view of the attached drawings.

| | |
|---|---|
| Fig. 1 | shows a schematic diagram of the methodology for determining a risk indicator value according to the present invention; |
| Fig. 2 | shows a schematic diagram of a sub-processing stage of the methodology of fig. 1, used for determining a risk probability based on different risk parameters; |
| Fig. 3 | shows a schematic diagram of the process of the present invention for determining a partial risk probability of a risk category, based on a number of risk parameters; |
| Fig. 3a | shows a graph of the evaluation function used in the process according to claim 3; |
| Fig. 3b | shows a scale for evaluating risk parameters; |
| Fig. 3c | shows a graph of the risk density of one risk parameter used in the process according to Fig. 3; |
| Fig. 4 | shows a schematic diagram of determining a risk indicator value based on partial risk probabilities of a number of risk categories according to the present invention; |
| Fig. 5 | shows a schematic diagram of the technical architecture for realising the process according to the present invention; |
| Fig. 6a and 6b | together show a flow chart description of the process according to the present invention; |
| Fig. 7 | shows a flow chart of a process for aggregating a number of risk indicator values according to the present invention; and |
| Fig. 8 | shows a schematic illustration of the organisation and management of input data in a first data base means according to the present invention. |

Before describing the details of determining a risk indicator value according to the present invention, a short overview of the basic steps for such determination is given.

When illustrating the present invention, an embodiment is described in which a client is utilising a credit or loan from a bank and the risk involved with the credit or loan shall be evaluated, checking the various parameters associated with the client on a per account level. This embodiment serves for illustration purpose only, and the present invention is not limited to such applications. The invention may, for example, also be applied to other financial and commercial transactions, such as internal rating system of borrowers, or other technical process, such as evaluation of key performance indicators for process supervision.

The process for determining the risk indicator value has the basic form of:

$$Credit\ risk\ indicator\ (CRI) = (Risk\ probability) \cdot (net\ utilization)$$

In the context of the present embodiment, the expressions "credit risk indicator" and "risk indicator value" are used synonymously. The more generic term "risk indicator value" refers to a risk involved with any type of transaction or process, wherein the term "credit risk indicator" refers to a risk indicator value describing the risk involved with a credit transaction.

For one client and one account various risk parameters are grouped into several risk categories, such as Accounting, Credit History,, Economical situation/balance sheet data, and Personal situation/management information. For each risk category, a number of risk parameters is defined and evaluated, using an evaluation function F.

The risk parameters in each risk category are classified; this means that using the evaluation function each risk parameter is assigned an evaluation value , e.g. in the range from 0 to 10. Subsequently, a risk parameter is evaluated as being relevant if it lies within certain ranges of the interval [0; 10], e.g. in the intervals [0; 4] and [5; 10]. A risk parameter is categorized as critical when evaluated in [5,10], uncritical when evaluated in [0,4] or neutral when evaluated in (4,5) Critical and uncritical risk parameters after evaluation form set of relevant risk parameters and the combination of these relevant risk parameters represents risk criteria.

Subsequently, each risk parameter which is considered to be relevant is assigned a risk density function $D_j$ ($j \in \{1, \ldots, k\}$) for determining a risk density of the respective relevant parameter. A common risk density of all relevant parameters of one risk category is determined.

$$D := \frac{\min(D_1, \ldots, D_k)}{\int_{[0,1]} \min(D_1, \ldots, D_k)}$$

From this common risk density a partial risk probability $P_i$ of the respective risk category is derived.

$$P_i := \int_{[0,1]} tD(t)dt \, .$$

To each partial risk probability a weight $W_i$ is associated wherein this weight depends on two factors: the first factor is based on the number of critical parameters within a category, and the second factor has been determined empirically.

The total risk probability $P$ of all risk categories is determined as a weighted average value of the partial risk probabilities.

$$P := WA(P_1, W_1, \ldots, P_k, W_k).$$

wherein

*$W_i$ = (I + number of critical parameters in the risk category i) x*

*(defined weight of the respective risk category i)*

Further, a net utilization of a client is determined as:

*net utilization = (utilization at a point in time) - (value of collaterals at a point in time)*.

In the following, the method will be described in further detail.

In the methodology of the present invention for determining the risk indicator value (or credit risk indicator; CRI) the complex relationship between individual risk parameters has been taken into account to enable precise risk identification. Risk parameters within one risk category are all treated equally.

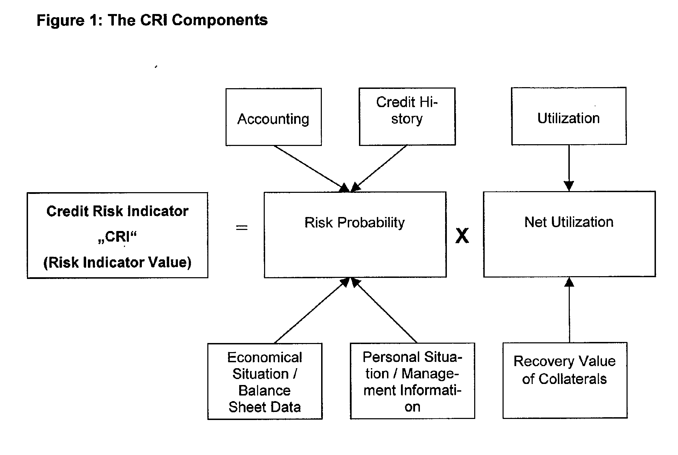

Fig. 1 shows the overall design of the methodology of the present invention in which the risk indicator value (CRI) is determined as a product of the total risk probability of one transaction (per client and per account) and the net utilisation associated with said transaction and client.

For determining the total risk probability, parameters with respect to the accounting, credit history, economical situation, and personal situation of the client are taken into account. For determining the net utilisation involved with the transaction in question, the amount of money claimed as well as the value of collaterals at a certain point of time provided by the client are taken into account.

The risk indicator value automatically indicates the risk associated with a particular client at a particular point in time and is defined as the product of risk probability and net utilization. The risk probability designates the probability with which the respective transaction poses a risk for the transaction provider.

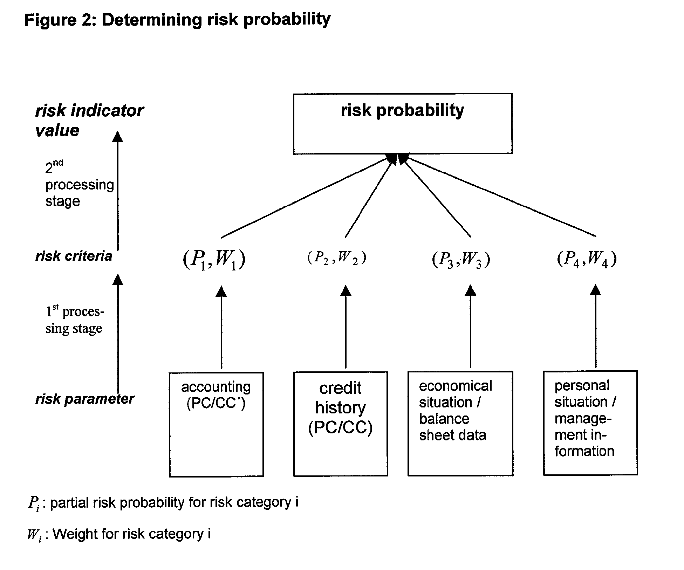

The client input data are grouped in the four risk categories shown in fig. 1 and 2. Within each category, risk parameters are defined which are derived from client input data. The combination of risk parameters within each category are processed to determine a partial risk probability of said category. Each category is assigned a weight $W_i$.

Fig. 2 shows a schematic diagram of the first and the second processing stage for determining the risk probability from a number of risk parameters, grouped according to four risk categories. In the first stage of the process according to the present invention, risk criteria are formed based on relevant risk parameters and partial risk probabilities are determined and associated with respective weights of the risk categories. In the second processing stage, the partial risk probabilities and associated weights of all risk categories are combined to determine the risk probability. Accordingly, the risk parameters for the first stage of the methodology according to the present invention are measured, e.g. in terms of amount, frequency, variability etc., and dynamically evaluated using associated evaluation functions. To obtain a highly reliable system for risk identification it is important that the risk parameters and evaluation criteria are as complete as possible. Evaluation takes place at a certain day and time on the basis of all available up to date information with respect to the above mentioned categories.

Risk parameters x are values which contain risk relevant information of the transaction. They directly reflect actual client input data. Their relevance therefore essentially depends from the quality of the available data. For obtaining a reliable result it is important to take into account as much information as possible. Nevertheless, for the sake of describing the present invention we shall illustrate only a few examples of the large number of possible risk parameters which can be taken into account in the methodology of the present invention. In one preferred embodiment of the present invention it is e.g. envisaged to take into account up to fifty risk parameters.

Examples for risk parameters taken into account in the present invention.

Risk Category: Accounting

1. Turnover with respect to tendency and absolute values:
The relative changes of the accumulated annual turnover is determined with respect to the turnover of the preceding years based on e.g. 36 months. The relative change of the accumulated turnover of one month is determined with respect to the preceding month, e.g. on the basis of the last four months. Further, the accumulated annual turnover of e.g. the past three years and the monthly turnover of the last year are determined.

2. Long-term debtor
Permanent significant utilization of credit line of a turnover-relevant account during the past six months

Risk Category: Credit History

1. Seizure: Direct data are available with respect to the date and amount of seizures as well as the number of seizures during the last 12 months.
2. Reminders: Data are directly available with respect to dates, amounts and number of reminder letters e.g. during the last 12 months.
3. Expired credit line: time since the expiration of credit line

Risk Category: Economical Situation:

1. Property: The actual value of total property of a client
2. Income: The total income of a client

Category: Personal Situation:

1. Age
2. Profession

Please note that the above are only few examples of a large number of possible risk parameters to be taken into account.

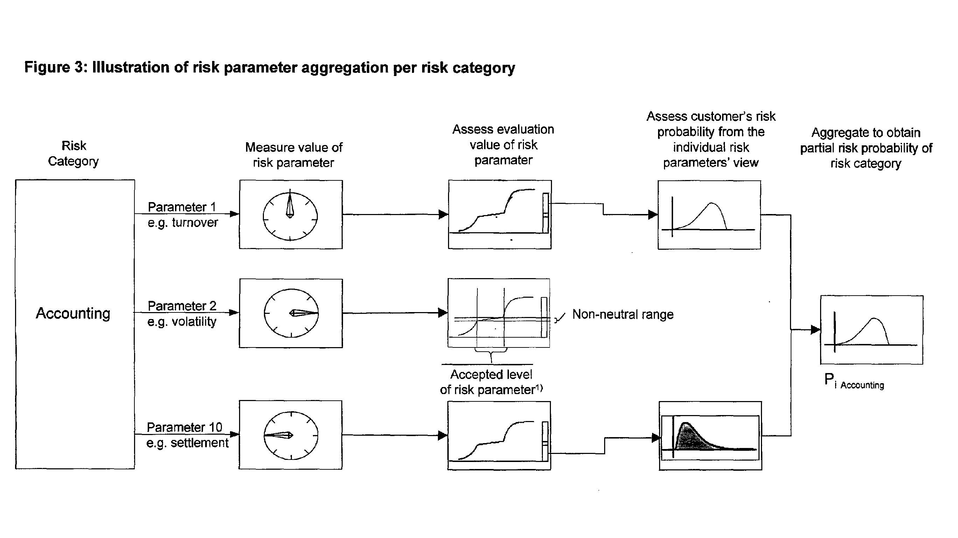

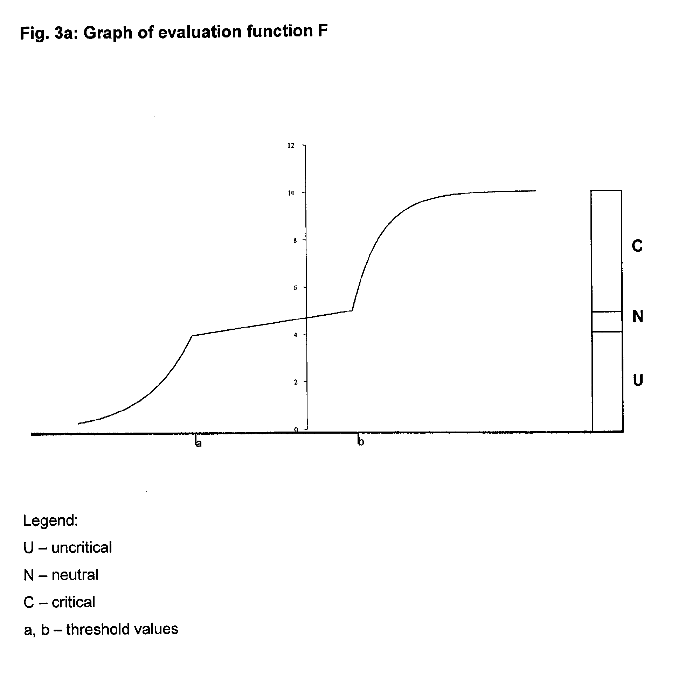

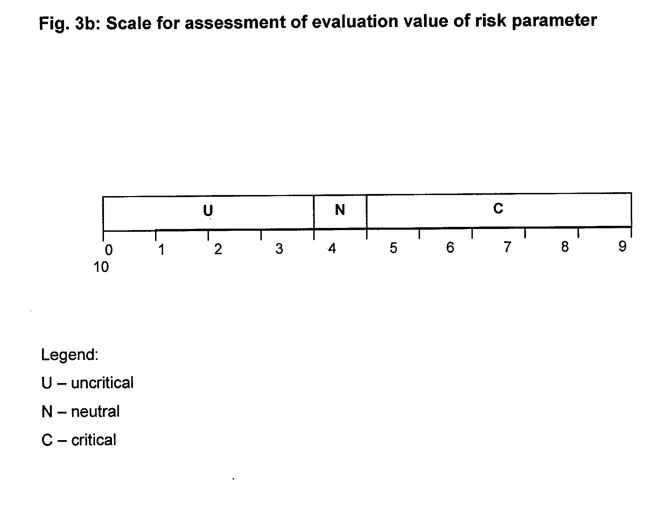

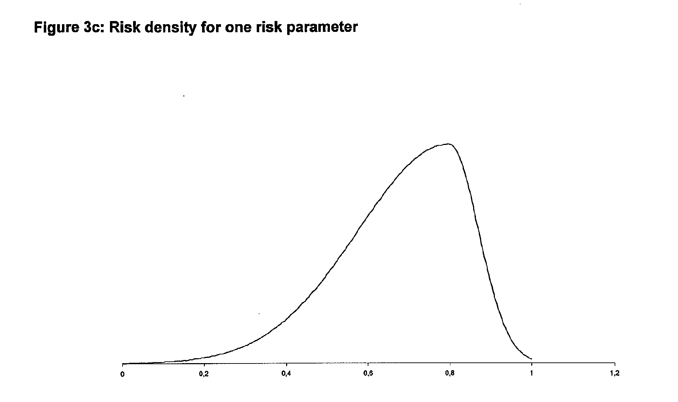

According to the present invention, once the risk parameters to be taken into account are defined and the necessary client input data have been obtained, risk parameter values x are determined and evaluated using risk parameters specific evaluation functions *F(x)*. This is schematically shown in the first three stages of fig. 3, designated risk category, measure value of risk parameter, and assess evaluation value of risk parameter .

The evaluation functions are defined specifically for each risk parameter, based on a generic equation. The evaluation functions assigns value in the interval of [0,10] to each risk parameter. The evaluation function serves for distinguishing three ranges, i.e. uncritical, neutral and critical. In the ranges uncritical and critical, which are deemed to be risk relevant ranges, the evaluation function is monotonously increasing to facilitate the evaluation and discrimination of relevant features. In the following, one example for an evaluation function is given without the invention being limited to this specific function. The evaluation function is defined by threshold values *a, b* and stretching parameters *c, d*. The threshold values *a* and *b* determine the thresholds between the uncritical and neutral, and neutral and critical ranges respectively. The neutral range lies between the uncritical and critical range. The stretching parameters *c, d* determine the degree of escalation of the evaluation function. The larger the stretching parameters are, the larger is the escalation of the respective risk parameter. *a, b, c,* and *d* are constants for a respective risk parameter. The evaluation function is designated $F_{a,b,c,d}$:

$$F_{a,b,c,d}(x) := \begin{cases} 4\exp(c(x-a)) & , x \le a \\ \dfrac{x-a}{b-a} + 4 & , a < x < b \\ 5[2 - \exp(-d(x-b))] & , b \le x \end{cases}$$

Fig. 3a shows a graphical representation of the evaluation function.

At the right hand side of the evaluation function the three ranges uncritical, neutral and critical are indicated.

For certain parameters the evaluation function may also be monotonously decreasing. Then it has the form $F_{b,a,d,c}(-x)$. It can also happen that only parts of the function are relevant for the evaluation. The values *a, b, c, d* satisfy the following:

- The threshold between the neutral and the critical range is always defined;
- the threshold between the uncritical and the neutral range may be omitted;
- the stretching factor for the critical range is always defined;
- the stretching factor for the uncritical range can be omitted

For determining the values *a, b, c. d* for each risk parameter empirical knowledge has been used.

For example: for parameter i, a and b are the threshold values. Further, this parameter has the evaluation value $y_1$ for the parameter value $x_1(x_1 < a)$ and $y_2$ for $x_2(b < x_2)$. The stretching parameters are then described by:

$$c = -\frac{\ln(y_1/4)}{x_1 - a} \quad \text{and} \quad d = -\frac{\ln((10 - y_2)/5)}{x_2 - b}.$$

A detailed description of the evaluation functions is given by way of example for a selected number of risk parameters below.

It can be necessary to evaluate risk parameters several times. If a risk parameter does not show a tendency, it will be designated to be neutral, e.g. F = 4, 5.

Examples for evaluating specific risk parameters:

Risk Category: Accounting

**1. Turnover:**

AU$_i$ is defined as the average utilization during the month i.

**1.1) Tendency**

- Measurement: relative change of the accumulated annual turnover as compared to the turnover of the preceding year, based on the last 36 months
  $AT_i$: accumulated annual turnover during the last 12 months (months $(12(i-1)+1)$ to $12i$)

i.) If $AT_{-2} > AT_{-1} > AT_0$, then

$$x := \max\left\{\frac{AT_{-1}}{AT_{-2}} - 1, \frac{AT_0}{AT_{-1}} - 1\right\}.$$

ii.) If $0 \neq AT_{-2} < AT_{-1} < AT_0$, then

$$x := \min\left\{\frac{AT_{-1}}{AT_{-2}} - 1, \frac{AT_0}{AT_{-1}} - 1\right\}.$$

III.) If $0 = AT_{-2} < AT_{-1} < AT_0$, then $x := \frac{AT_0}{AT_{-1}} - 1$.

evaluation function:

PC (Private Client)

(-a) = -0.1 threshold for significant decrease of turnover
(-b) = 0.2 threshold for significant increase of turnover (a > b)

$$c = -\frac{\ln 0.4}{0.15}$$

$$d = -\frac{\ln 0.25}{0.1}$$

CC (Corporate Client)

(-a) = -0,1 threshold for significnat decrease of turnover
(-b) = 0,1 threshold for significant increase of turnover (a > b)

$$c = -\frac{\ln 0,4}{0,15}$$

$$d = -\frac{\ln 0,01}{0,9}$$

$$F_{Annual.change.of.turnover} = F_{b,a,d,c}(-x)$$

If none of the cases i, ii, iii applies, the parameter is neutral: $F_{Annual\ change\ of\ turnover} = 4.5$

- Measurement: Relative change of accumulated monthly turnover as compared to accumulated turnover of preceding month, based on last four months

$MT_i$: accumulated monthly turnover for month $i$

i.) If $MT_{-3} > MT_{-2} > MT_{-1} > MT_0$, then

$$x := \max\left\{\frac{MT_{-2}}{MT_{-3}} - 1, \frac{MT_{-1}}{MT_{-2}} - 1, \frac{MT_0}{MT_{-1}} - 1\right\}.$$

ii.) If $0 \neq MT_{-3} < MT_{-2} < MT_{-1} < MT_0$, then

$$x := \min\left\{\frac{MT_{-2}}{MT_{-3}} - 1, \frac{MT_{-1}}{MT_{-2}} - 1, \frac{MT_0}{MT_{-1}} - 1\right\}.$$

iii.) If $0 = MT_{-3} < MT_{-2} < MT_{-1} < MT_0$, then

$$x := \min\left\{\frac{MT_{-1}}{MT_{-2}} - 1, \frac{MT_0}{MT_{-1}} - 1\right\}.$$

evaluation function:

PC

        (-a) = -0.0083 threshold for significant decrease of turnover
        (-b) = 0.016 threshold for significant increase of turnover (a > b)

$$c = \frac{\ln 0.4}{0.0077}$$

$$d = -\frac{\ln 0.5}{0.008}$$

CC

        (-a) = -0,0083 threshold for significant decrease of turnover
        (-b) = 0,0083 threshold for significant increase of turnover (a > b)

$$c = \frac{\ln 0.4}{0,0117}$$

$$d = -\frac{\ln 0,25}{0,0917}$$

$$F_{Monthly.change.of.turnover} = F_{b,a,d,c}(-x)$$

If none of the cases i, ii, iii applies, the parameter is neutral: $F_{Monthly\ change\ of\ turn\ over} = 4.5$

**1.2) Amounts**

Measurements: If $AU_0 > 0$, Accumulated annual and monthly turnover

- No turnover during last year
  If $AT_0 = 0$, the account has no turnover. Evaluation: PC: 10, CC: 10 (PC = Private Client; CC = Corporate Client)

- No turnover during last two months
  If $MT_{-1} = MT_0 = 0$, the account shows no turnover. Evaluation: PC: 10, CC: 10

- Accumulated annual turnover during the last year with regard to the average limit
  $AL_i$: average annual limit for the months $(12(i-1)+1)$ to $12i$ (arithmetic mean value of the monthly limits of year i)
  If $AL_0$, then $x := \dfrac{AT_0}{AL_0}$ relative accumulated yearly turnover during the last year
  Evaluation Function:

  PC / CC

    (-a) = 3
    (-b) = 12

$$c = -\frac{\ln 0.4}{0.6}$$

$$d = -\frac{\ln 0.5}{12}$$

$$F_{Annual.rel.turnover} = F_{b,a,d,c}(-x)$$

- Accumulated monthly turnover during the last month with regard to the average limit
  $L_i$: average monthly limit during month i
  If $L_0 > 0$, then $x := \dfrac{MT_0}{L_0}$, relative accumulated monthly turnover during last month
  Evaluation function:

  PC / CC

    (-a) = 0.33
    (-b) = 1

$$c = -\frac{\ln 0.4}{0.133}$$

$$d = -\ln 0.5$$

$$F_{Mouthly.rel.turnover} = F_{b,a,d,c}(-x)$$

**2. Long-term debtor**

Measurement: relative utilization of a credit lines of a turnover-relevant account during the past six months
$AU_i$: average utilization during the month i
$L_i$ : average limit during the month i
If for the past 6 months $UL_i > 0$, then $RAU_i := \dfrac{AU_i}{L_i}$, the relative utilization for the month i

$$x := \min\{RAU_{-5}, RAU_{-4}, RAU_{-3}, RAU_{-2}, RAU_{-1}, RAU_0\}$$

Evaluation function:

PC

a = -0.01
b = 0.65 Threshold for critical relative utilization
*c* not relevant, since $x \geq 0$

$$d = \frac{\ln 0.2}{0.2}$$

CC

a = -0.01
b = 0.65 Threshold for critical average utilization
*c* not relevant, since $x \geq 0$

$$d = -\frac{\ln 0.2}{0.35}$$

$$F_{Long\text{-}term.debitor} = F_{a,b,c,d}(x)$$

Risk Category: Credit History

**3. Expired credit line**

Measurement: months since the credit line has expired
If a credit line has expired, x: months since expiration
Evaluation function:

PC / CC

b = 3 threshold for critical duration
*c* not relevant, since $x \geq 0$

$$d = -\frac{\ln 0.01}{3}$$

$$F_{Expire.credit.line} = F_{a,b,c,d}(x)$$

Risk Category: Personal Situation

**4. Age**

Age of Client (only for PC)
Measurement: Data are available directly
x: Age in years
Evaluation function:

PC

a=30
b = 50
*c* not relevant

$$d_1 = -\frac{\ln 0.4}{10}$$

$$d_2 = -\frac{\ln 0.6}{10}$$

$$F_{Age} = F_{-b,-a,c,d_1}(-x) \text{ , if } x \leq 40$$

$$F_{Age} = F_{a,b,c,d_2}(x), \text{ if } x \geq 40$$

**5. Profession:**

Current profession of client (PC)
Measurement: Data are available directly

- State employee : 4.5
- Employee: 5.2
- Pensioner: 5.5
- Self-employed: 6
- Unemployed: 7

Above are a few examples for illustrating how the constants of the risk evaluation function F can be determined with respect to each risk parameter.
Below, examples for risk parameters $x$, threshold values $a, b$, and stretching parameters $c, d$ are summarised in a table for the above examples, separated according to private clients (PC) and corporate clients (CC).

| Risk parameter | | Threshold values | | Stretching parameters | |
|---|---|---|---|---|---|
| | | $a$ | $b$ | $c$ | $d$ |

**Account management (PC / CC)**

| | Risk parameter | $a$ | $b$ | $c$ | $d$ |
|---|---|---|---|---|---|
| 1. | Turnover | | | | |
| | i.) Tendency | | | | |
| | • Annual turnover: | | | | |
| | PC | 0.1 | -0.2 | 6.1086 | 13.8629 |
| | CC | 0.1 | -0.1 | 6.1086 | 5.1169 |
| | • Monthly turnover | | | | |
| | PC | 0.0083 | -0.016 | 118.9988 | 86.6434 |
| | CC | 0.0083 | -0.0083 | 78.3154 | 15.1177 |
| | ii.) Amounts (PC / CC) | | | | |
| | • $AT_0 = 0$ | | | | |
| | • $MT_{-1} = MT_0 = 0$ | | | | |
| | • Relative accumulated yearly turnover | -3 | -12 | 1.5272 | 0.0578 |
| | • Relative accumulated monthly turnover | -0.33 | -1 | 6.8894 | 0.6931 |
| 2. | Long-term debtor | | | | |
| | PC | -0.01 | 0.65 | - | 8.0472 |
| | CC | -0,01 | 0.65 | - | 4.5984 |

**Credit history /debts (PC)**

| | Risk parameter | $a$ | $b$ | $c$ | $d$ |
|---|---|---|---|---|---|
| 3. | Expired credit line | | | | |
| | PC | -1 | 3 | - | 1.5351 |
| | CC | -1 | 3 | - | 1.5351 |

**Personal Situation (PC)**

| | Risk parameter | $a$ | $b$ | $c$ | $d$ |
|---|---|---|---|---|---|
| 4. | Age | 30 | 50 | - | $0.0916 \, (d_1)$ |
| | | | | - | $0.0511 \, (d_2)$ |
| 5. | Profession | | | | |

Fig. 3b schematically shows the result of applying the evaluation function $F$ to each risk parameter value $x$. The result is a number in an interval from zero to ten (i.e., [0, 10]). U is designating an uncritical area and C is designating a critical area. The interval [4, 5] designates a neutral area wherein the parameter is not relevant for determining an overall risk probability. This means that risk parameters which are outside of the neutral range N = [4, 5] are designated risk relevant parameters or non-neutral parameters.

According to the present invention, as also illustrated in fig. 3, once the evaluation value or relevance of each risk parameter is determined, the non-neutral risk parameters for each risk category are processed further to determine a risk probability of each risk category; or partial risk probability. For determining the risk probability, each non-neutral risk parameter x is assigned a risk density $D_j$ which is defined as a function in the interval [0, 1] so that:

$$D_j : [0,1] \rightarrow R_{>0} \ \text{ with } \int_{[0,1]} D_j = 1 \, .$$

This is also shown in fig. 3.

Each risk density function is again defined for each non-neutral risk parameter separately, as explained below.

The risk density function serves for determining a risk distribution for each individual risk parameter. The risk density function is determined for the non-neutral risk parameters. To obtain a partial risk probability of each respective category, the risk densities of all relevant risk parameters are aggregated within one category according to the following equation, within one category

$$D_{Cat.i} := \frac{\min(D_1,...,D_k)}{\int_{[0,1]} \min(D_1,...,D_k)}$$

The result again is a risk density - the common risk density of all relevant parameters of one category, normalised to obtain a value in the interval [0, 1]. If in one category no risk parameter is relevant, a neutral risk density D is assigned.

The partial risk probability $P_i$ for the respective category i is a risk to be expected and is calculated according to the equation:

$$P_i := \int_{[0,1]} t \cdot D_{Cat.i}(t) dt \, .$$

This partial risk probability is the result of the first processing stage of the method according to the present invention shown in fig. 3.

As outlined above, a risk density function D is assigned to each relevant risk parameter wherein the risk density function represents the density of the risk probability of the respective risk parameter, taking into account its parameter value. The general form of the risk density function is explained below. It is defined using risk density parameters *e,f* and *g*.

The risk density parameters *e, f, g* are dependent on the specific risk parameter and its evaluation, as detailed below:

*e defines the maximum of D (e = 0,8 in fig. 3c) over* **R**, *where* **R** *are the real numbers*
*f defines the degree of escalation for x < e; and*
*g defines the degree of escalation for x > e.*

It is assumed that $e \in R$, *f, g* $> 0$ , wherein **R** is the set of real numbers. The pre-risk density of a single risk parameter $D'_{e,f,g}: R \rightarrow R_{>0}$, is then defined as:

$$D'_{e,f,g}(x) := \begin{cases} \exp(-f(x-e)^2) & , x \le e \\ \exp(-g(x-e)^2) & , e < x \end{cases} \, .$$

Fig. 3c shows a graphical representation of the risk density function according to the above equation.

To obtain a risk density $D_{e,f,g}$ > over the interval [0,1] for each respective risk parameter, the following equation is used:

$$D_{e,f,g} := \frac{D'_{e,f,g}\big|_{[0,1]}}{\displaystyle\int_{[0,1]} D'_{e,f,g}} : [0,1] \to R_{>0}.$$

The risk density function according to the present invention is a generalisation of the density function of normal distribution. No symmetry was assumed: Therefore it is possible to describe asymmetric distributions. Such probability densities can be found in real life processes.

In the following, the determination of the risk density function of some exemplary risk parameters is explained. The parameters $e, f, g$ depend on the respective risk parameters and their evaluation values. When determining $e, f, g$ statistical analysis and expert knowledge has been used.

The parameters $e$, i.e. the maximum of $D$ when extended over **R**, is determined directly: At this point the risk density is the highest. For further description of the risk density function, further reference points $(x_1, y_1)$ and $(x_2, y_2)$ are used, wherein $x_1 < e < x_2$ and $0 < y_1, y_2 \leq 1$. This reference points are chosen so that the relative risk frequency is within the confidence interval $[x_1, x_2]$.

For these constants, one obtains:

$$f = -\frac{\ln y_1}{(x_1 - e)^2}$$

and

$$g = -\frac{\ln y_2}{(x_2 - e)^2}.$$

This defines the pre-risk density function $D'_{e,f,g}$ for a single risk parameter. Normalising leads to $D_{e,f,g}$ as explained above.

For the risk density parameters $e, f, g$, the following should be observed:

the parameter e, defining the maximum of $D$ when extended over **R**, is always defined;
the risk density parameter $f$ may be missing;
the risk density parameter $g$ may be missing.

The following example shall help to illustrate the process of obtaining the parameters for calculating the risk density function:

The risk density function of a debitor, having a permanent relative utilisation of 65 percent during the last six months is looked for:

The portfolio of engagements, regarding the risk parameter "long term debitor 65%" is investigated; identifying the highest risk concentration at 0,4 (e=0,4)
the number of risk relevant engagements most probably is between 25% and 55%, so that $x_1$=0,25 and $x_2$=0,55; to correctly describe the risk concentration, the probability outside of $[x_1, x_2]$ must be sufficiently low. Therefore, the following estimation is obtained: $y_1, y_2 < 0,1(x_2-x_1)$;
the pairs (0,25; 0,01) and (0,55; 0,01) fulfil these conditions, so that the following parameters $f, g$ are derived:

$$f = -\frac{\ln 0.01}{(0.15)^2}$$

and

$$g = -\frac{\ln 0.01}{(0.15)^2}.$$

A detailed description of the risk density for some exemplary risk parameters follows:

Risk Category: Accounting

**1. Turnover**

**1.1 Tendency**

- $F = F_{Annual.change.of.turnover}$
  If $F \leq 4$:

$$e(F) = 0$$

$$f(F) \text{ not relevant}$$

$$g(F) = -\frac{\ln 0.01}{(0.01)^2}$$

If $F \geq 5$:

$$e(F) = 0.0667F - 0.1333$$

$$f(F) = -\frac{\ln 0.01}{(0.1)^2}$$

$$g(F) = -\frac{\ln 0.01}{(0.0167F + 0.0666)^2}$$

- $F = F_{Monthly\ change.of.turnover}$
  If $F \leq 4$:

$$e(F) = 0$$

$$f(F) \text{ not relevant}$$

$$g(F) = -\frac{\ln 0.01}{(0.01)^2}$$

If $F \geq 5$:

$$e(F) = 0.0667F - 0.1333$$

$$f(F) = -\frac{\ln 0.01}{(0.1)^2}$$

$$g(F) = -\frac{\ln 0.01}{(0.0167F + 0.0666)^2}$$

**1.2 Amounts**

- $AT_0 = 0$:

$$e = 0.9$$

$$f = -\frac{\ln 0.01}{(0.15)^2}$$

$$g = -\frac{\ln 0.01}{(0.6)^2}$$

- $MT_{-1} = MT_0 = 0$:

$$e = 0.25$$

$$f = -\frac{\ln 0.005}{(0.05)^2}$$

$$e = -\frac{\ln 0.005}{(0.05)^2}$$

- $F = F_{Annual.rel.turnover}$
  If $F \leq 4$:

$$e(F) = 0.00125F$$

$$f(F) = -\frac{\ln 0.0001}{(0.00125F + 0.05)^2}$$

$$g(F) = -\frac{\ln 0.001}{(0.001F + 0.001)^2}$$

If $F \geq 5$:

$$e(F) = 0.1167F - 0.2833$$

$$f(F) = -\frac{\ln 0.01}{(0.0167F - 0.1867)^2}$$

$$g(F) = -\frac{\ln 0.01}{(0.0167F - 0.1833)^2}$$

- $F = F_{Monthly \cdot rel.turnover}$
  If $F \leq 4$:

$$e(F) = 0.00125F$$

$$f(F) = -\frac{\ln 0.0001}{(0.00125F + 0.05)^2}$$

$$g(F) = -\frac{\ln 0.001}{(0.001F + 0.001)^2}$$

If $F \geq 5$:

$$e(F) = 0.1167F - 0.2833$$

$$f(F) = -\frac{\ln 0.01}{(0.0167F - 0.1867)^2}$$

$$g(F) = -\frac{\ln 0.01}{(0.0167F - 0.1833)^2}$$

**2. Long-term debtor**

$F = F_{Long-term.debitor}$

**PC (Private Client):**

If $F \geq 5$:

$$e(F) = 0.0875F - 0.0375$$

$$f(F) = -\frac{\ln 0.01}{(0.0125F + 0.0875)^2}$$

$$g(F) = -\frac{\ln 0.01}{(0.15)^2}$$

**CC (Corporate Client):**

If $F \geq 5$:

$$e(F) = 0.1F - 0.1$$

$$f(F) = -\frac{\ln 0.01}{(0.0125F - 0.2125)^2}$$

$$g(F) = -\frac{\ln 0.01}{(0.0125F + 0.0875)^2}$$

Risk Category: Credit History

**3. Expired credit line**

$F = F_{Expired.credit.line.}$
Falls $F \geq 5$:

$$e(F) = 0.1F - 0.2$$

$$f(F) = -\frac{\ln 0.01}{(0.03F)^2}$$

$$g(F) = -\frac{\ln 0.01}{(0.01F - 0.3)^2}$$

Category: Personal Situation

**4. Age**

$F = F_{Age}$
If $F \geq 5$ :

$$e(F) = 0.0833F - 0.1667$$

$$f(F) = -\frac{\ln 0.01}{(0.05F - 0.1)^2}$$

$$g(F) = -\frac{\ln 0.01}{(0.15)^2}$$

**5. Profession**

• employee:

$$e = 0.02$$

$(F = 5.2)$

$$f = -\frac{\ln 0.01}{(0.015)^2}$$

$$g = -\frac{\ln 0.01}{(0.015)^2}$$

- pensioner:

$$e = 0.05$$

($F = 5.5$)

$$f = \frac{\ln 0.01}{(0.03)^2}$$

$$g = -\frac{\ln 0.01}{(0.15)^2}$$

- self-employed:

$$e = 0.2$$

($F = 6$)

$$f = -\frac{\ln 0.01}{(0.1)^2}$$

$$g = -\frac{\ln 0.01}{(0.3)^2}$$

- unemployed:

$$e = 0.5$$

($F = 7$)

$$f = -\frac{\ln 0.01}{(0.2)^2}$$

$$g = -\frac{\ln 0.01}{(0.3)^2}$$

The above are only a few examples of determining the risk density for selected risk parameters for determining the risk probability for each individual risk parameter, as shown in fig. 3 of the drawings.

As explained above, once the risk density function is determined for each relevant risk parameter and, accordingly, the associated risk probability of said parameter is determined, said risk probabilities are aggregated to determine a partial risk probability of the respective risk category according to the equation:

$$P_i := \int_{[0,1]} t \cdot D_{Cat.i}(t)\,dt \ .$$

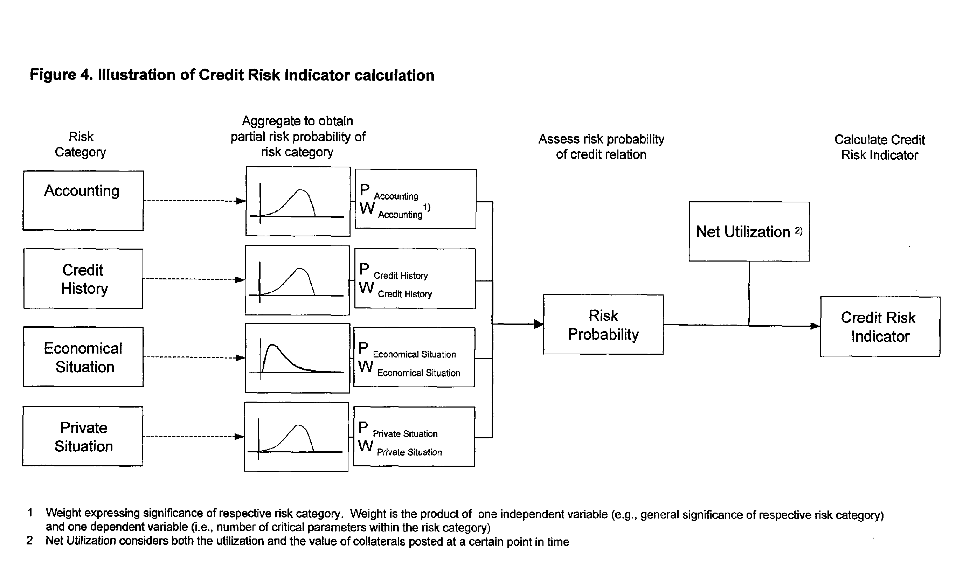

As shown in fig. 4, for each of the risk categories, such as accounting, credit history, economical situation and personal situation, a partial risk probability is calculated. Further, each partial risk probability is assigned a weight which is defined as:

$$W_i =$$

*(1 + number of critical parameters in the risk category i) x (predefined*

*evaluation of the weight for the risk category i)*

The weight has a process dependent (the first factor) and a process independent (the second factor) component.

In the process dependent component the critical parameters (parameters having an evaluation value $\geq 5$) of each category are accounted for.

In the process independent part each risk category is evaluated based on empirical observation . For example the risk category Accounting is more important than Personal Situation. Furthermore, the quality and completeness of available client input data may be taken into account when determining the weights. Even further, the weights can be adapted to time intervals from which the client input data are derived.

Accordingly, each of the risk categories is evaluated by a pair of partial risk probability and weight ($P_i$, $W_i$) with $W_i > 0$. These pairs are aggregated to form a weighted average value, the risk probability $P$ for a certain client provider transaction:

$$P = WA(P_1, W_1, ..., P_{n+1}, W_{n+1}) := \frac{\sum_{i=1}^{n+1} W_i P_i}{\sum_{i=1}^{n+1} W_i} \ .$$

The risk probability $P$ expressed as the weighted average is than multiplied with the net utilization :

*Net utilization = ( utilization at a point in time) - (value of collaterals at a point in time)*

to determine the credit risk indicator (CRI) or risk indicator value. This credit risk indicator or risk indicator value is expressed in an amount of money referring to the risk involved with a certain transaction.

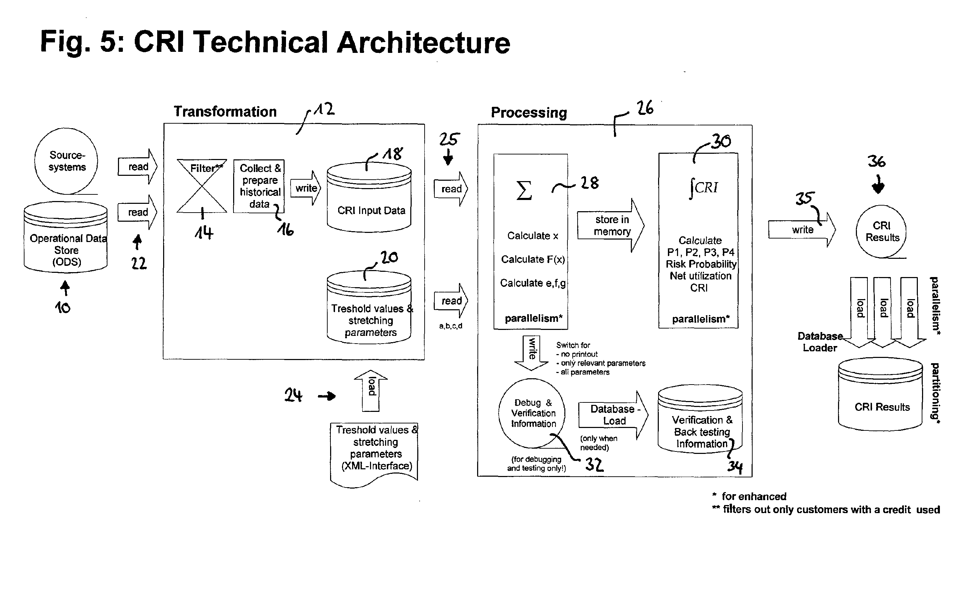

Fig. 5 shows a schematic diagram of a technical architecture for realising method and computer system according to the present invention.

Fig. 5 shows a source system 10 for providing client input data e.g. from a client data base resident in a bank or another transaction provider. Client input data are read by the transformation module 12, comprising an optional filter 14, a processing unit 16 for collecting and processing historical client input data and the first and second data bases 18, 20 for storing client input data and threshold values and stretching parameters, respectively. The transformation module 12 comprises an input 22 for reading client input data and an input 24 for reading threshold values *a, b* and stretching parameters *c, d used* for subsequently determining the evaluation values of risk parameters.

The data from the transformation module 12 are read into a processing module 26, comprising first and second calculating units 28, 30, an optional debug & verify unit 32 and an optional verification &back testing information data base 34. The results of the first calculation unit 28 are stored in a memory and transferred to the second calculation unit 30. The results of the second calculation unit 30 are written into a result data base 36.

In general, the data base module 12 and the processing module 26 can be implemented with any suitable, known data base structures and processing units. In one preferred embodiment, the core of the processing module 26 has been developed in C, on a hardware platform, interacting with a relational database. For processing the database, among a number of possibilities, such as ODBC (Open Database Connectivity) and native access, in the preferred embodiment ODBC has been selected as an interface between the code and the database. The second database 20 for the threshold values *a, b* and stretching parameters *c, d,* required by the C code processing module 26 has been generated. The weights for the four different risk categories have been moved into an optional external file.

Calculation unit 28 is used for calculating the risk parameters x, the evaluation functions F(x) and the risk density parameters $e, f\,g$ used for determining the respective density functions. Calculation unit 30 is used for calculating the partial risk probabilities of the different risk categories, the overall risk probability as a function of the partial risk probabilities, the net utilization and the risk indicator value. Both calculation units 28 and 30 may operate in parallel. Optionally and also in parallel, results from the first calculation unit 28 can be written into debug information unit for debugging and testing the system.

For calculating the value of risk parameters, risk evaluation functions and density functions, in a preferred embodiment, the original code was implemented in such a way that for each risk parameter a separate function is written, which is then called by a function pointer in the main calculation loop.

With regard to the implementation of the first and second data base 18, 20, in the preferred embodiment, any relational database scheme can be used.

The number of the fields accessed by the code is kept minimal so that no fields other than those required by and involved in the calculation are accessed by the code. This feature provides not only a reduction in the database access overhead, but also a higher degree of compatibility to possible further modifications that may be done on the database structure.

The calculation module uses the same key identifier fields and relationships between the tables as those defined in the Operational Data Store (ODS) . Therefore the possibility of clashes between the calculation module and the other elements that are accessing the database is minimised.

The program is designed to be executed periodically (i.e. on a daily, weekly or monthly basis, according to the needs) to update the CRI parameters in the database. This method has some advantages such as:

- No user interaction is required, so that it is suitable for batch processing

- The up to date data of any client can be acquired any time.

The drawback is that, it introduces significant overhead to the system, as every single client data has to be calculated regardless of if it is needed to be calculated or not. To overcome this drawback, a possible solution would be introducing a field in the database to indicate which client data have been changed and are needed to be calculated again so that only those need can be calculated.

The CRI Calculation Module exists as a standalone executable file. The module interacts with an interface to read in the data required for the computation and then the output is again written back to the database. The program flow is as follows:

- The program reads in the threshold values *a, b* and stretching parameters *c, d* table from a database table.

- From the Operational Datastore (ODS), it reads in client data which consists of:

  o Personal Information

  o Account Information

  o Subaccount Information

  o Credit Information

- It makes the calculations for each account and aggregates the results to client level

- Then it writes the results into the Star Schema and optionally some debugging information onto the screen, so that more internal parameters can be examined.

Star Schema is a relational database schema for representing multidimensional data. A star schema is a set of tables comprising a single, central fact table surrounded by de-normalized dimensions. Each dimension is represented in a single table. Star Schema implements dimensional data structure with de-normalized dimensions.

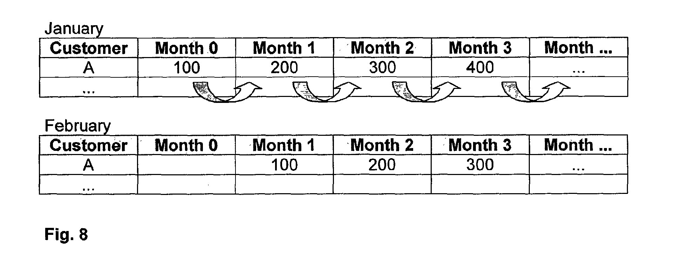

Fig. 8 shows a particular advantageous way of organising the first data base 18 containing the current and historical client input data.

The computation of the credit risk indicator (CRI) requires data for *n* months. Reading directly from the CDS (client data source) 10 would mean to read data from x sources for *n* months. For efficient calculation of the CRI the data is collected with an ETL (Extract-Transformation-Load) -Tool and put into an optimized table for the C-program.

The historization concept comprises two steps:

**Step one** moves the values of the actual month to the next month.

**Step two** fills the Month 0 with the values of the actual month. The advantage is to read only one month of data from the client data source.

So the month 0 always contains the current values. With this concept it is possible to access the historizized data directly. For example: To get the values of the last three months, just access Month 0 - 2.

By applying the above described scheme for organising in particular the client input data base 18, it is possible to organise the data in a way that all client input data necessary for calculating the credit risk indicator for one specific client are obtained by a single access to this data base.

As mentioned above the risk indicator value is calculated typically once per month at a fixed date, after all necessary data have been collected based on a monthly report. The monthly determination of the credit risk indicator values are stored in the results data base for a defined number of months so that a risk history for each client and account can be assembled for a period of several years.

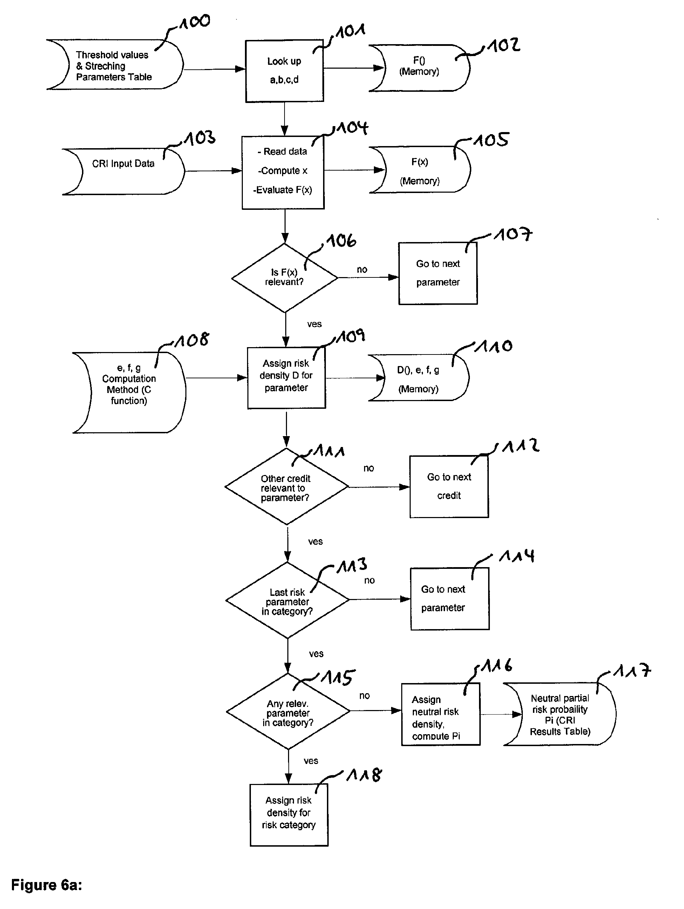

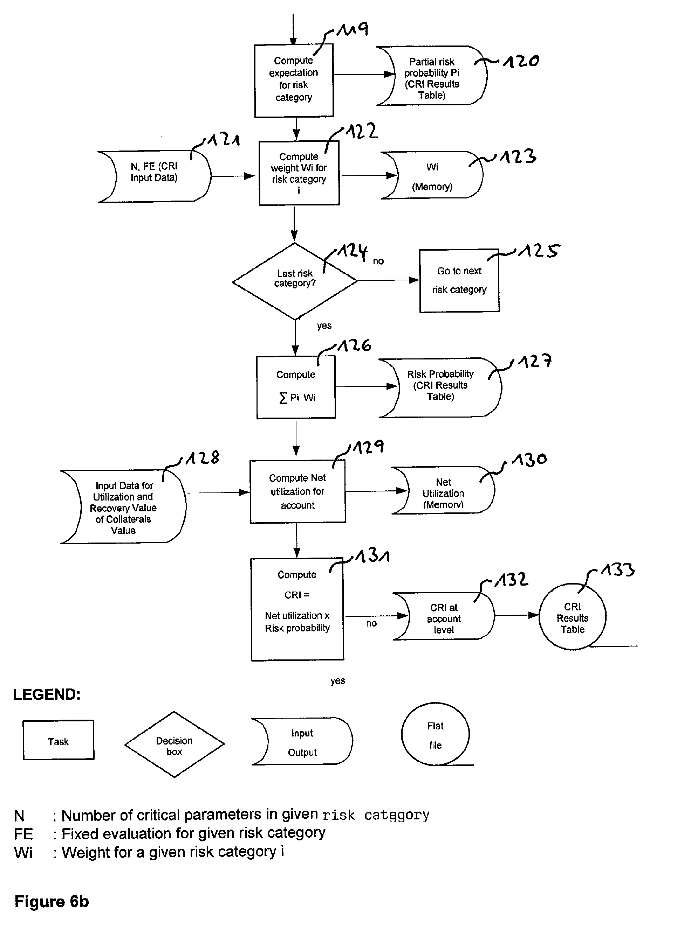

Fig. 6a and 6b show a flow diagram for performing the method according to the present invention. As explained on the bottom of fig. 6b the different designs of the boxes relate to tasks, decision boxes, input/output data and flat files for storing input or output data.

As shown in fig. 6a, threshold values *a, b* and stretching parameters *c, d are* read 100 from a table and stored in thresholds and stretching parameters database 20, the threshold values *a, b* and stretching parameters *c, d* necessary for the specific evaluation function are looked up 101 and stored in a memory 102 internal to the processing module 26. In a parallel or subsequently client input data are read 103 from client input data base 18, preferably by a single access to said database 18. Using the relevant client input data for a respective risk parameter and the applicable threshold values *a*, *b* and stretching parameters *c, d*, the risk parameter value *x* and the corresponding evaluation function *F(x)* are calculated 104 and also written to memory 105 internal to the processing module 26. From the result of the evaluation function *F(x),* it is determined whether the risk parameter is evaluated as relevant, i.e. critical or uncritical If no, the next parameter is determined and evaluated 107. If yes, the risk parameter is assigned a risk density *D* 109. For this purpose, the necessary risk density parameters *e,f g* are computed 108, as outlined above. The result, i.e. the risk density *D* and the risk density parameters *e, f, g* are stored in memory 110 internal to the processing module 26.

In the next step 111 it is determined whether there are further relevant risk parameters in the category under examination. If no, the next risk category is examined 112. If yes, it is determined whether the last risk parameter in the respective category is reached 113. If no, the next risk parameter in the risk category is evaluated 114. If yes, it is determined whether the respective risk category contains relevant, i.e. non-neutral parameters 115. If no, a neutral risk density is assigned to the risk category 116 and the partial risk probability is calculated as a neutral partial risk probability 117 and stored in memory internal to the processing module 26. If yes, the respective risk category is assigned a risk density 118. Using this risk density, a risk expectation or partial risk probability is calculated for the respective risk category 119 as a normalised risk density as described above. The partial risk probability is stored in memory 120 internal to the processing module 26.

In the next step, the weight $W_i$ associated with the respective risk category is calculated 122, using a fixed evaluation factor FE for the given risk category and the number of critical parameters in the given category as described above 121. The weight $W_i$ is stored in memory 123 internal to the processing unit 26.

Than it is determined whether the last risk category has been reached 124. If no, the method continues with the next category 125. If yes, the overall risk probability is computed 126 in the second calculation unit 30 as an weighted average of the partial risk probabilities. The overall risk probability is stored 127 in the result data base 36.

Subsequently, the net utilization for the respective client, account and transaction is calculated 129, using information about the actual utilization in the transaction and value of collaterals available for the transaction from the input data base 18; the necessary data are input at 128. The net utilization is stored 130 in the result data base 36.

Finally, the credit risk indicator is calculated 131 as the product of the net utilization and the overall risk probability and output 131 and stored 132 in the result data base 36.

The above described steps closely follow the methodology described above. Of course, variations and modifications may be realised within the scope of the independent claims. The expert will know how to implement the individual steps for optimum efficiency and speed.

In one preferred embodiment of the invention it is also provided that a number of risk indicator values may be aggregated to improve possibilities of evaluation of the behaviours of a number of accounts or a number of clients according to different criteria. Some of the criteria might be the overall development of client, a group of clients, a group of transaction providers, a regional area or the like. As the size of each group may vary considerably it is necessary to provide some means of comparing different groups. This is possible by using the risk probabilities according to the present invention because the method of the present invention provides both absolute and normalised results.

The risk probability for a group of individual transactions is given by the weighted average of the individual risk probabilities, weighted by using the utilization. When additionally considering the total net utilisation, i.e. the sum of these individual net utilizations, a risk evaluation of the total group is possible.

A risk indicator value may be determined for a single transaction, a single client or a group of clients and/or transactions.

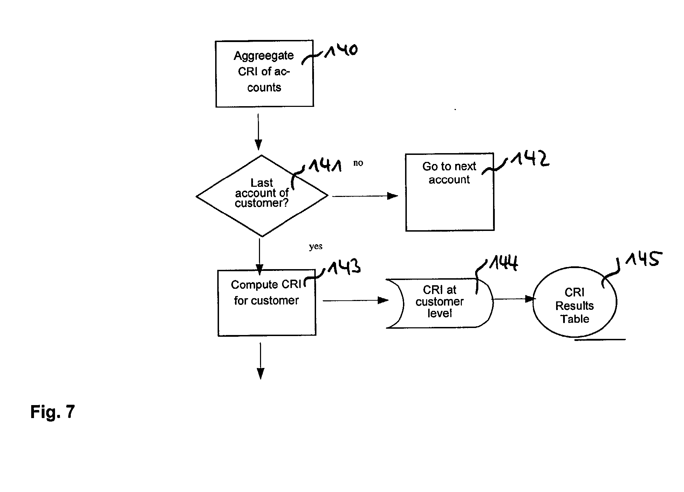

Fig. 7 shows one example of a flow diagram of determining the risk indicator value on an account level. Aggregation to higher levels and other dimensions are possible.

In step 140, a number of risk indicator values of various accounts of one client are aggregated. In step 141 it is determined whether the last account of the respective client is reached. If no, the next account is added 142. If yes, the risk indicator value for the respective client is calculated 143 and transferred 144 to the result data base 36, in step 145.

Further modifications can be made. For example, the risk probability and the net utilization can be evaluated separately. If for example the net utilisation is very high, the transaction can be looked at closer even though the risk probability itself is low or vice versa.

Further, methods for debugging and back testing the method of the present invention may be introduced. By back testing, the quality of the results are verified and eventually optimised. Back testing can be used to fine tune the threshold values $a$, $b$, stretching parameters $c$, $d$ and risk density parameters $e$, $f$ and $g$.

The present invention as disclosed above provides a system and method for evaluating the risk involved with a transaction between a client and a transaction provider which is capable of automatically processing a large amount of data in shortest time and providing a highly reliable result.

## Claims

1. An electronic data processing system for automatically determining a risk indicator value based on a number of risk parameters, for evaluating a risk involved with performing a transaction between a client and a transaction provider in said data processing system, the data processing system comprising:

   first input means (22) for inputting client input data relating to said client;
   first data base means (18) for storing said client input data;
   computing means (26);
   output means (35) for outputting said risk indicator value;
   said first data base means (18) comprising data management means for assembling and storing said client input data in a predetermined number of client input data files in said first data base means;
   said computing means (26) comprising:

   first reading means (25) for reading client input data from at least one of said client input data files of said first data base means (18) into said computing means (26);
   first calculating means (28) for determining risk parameter values (x) for a number of predefined risk parameters from said client input data;
   evaluation means (28) for evaluating each risk parameter value using an associated evaluation function to determine an evaluation value of said risk parameter;
   comparator means (28) for comparing each evaluation value with at least one threshold value to determine whether the associated risk parameter is critical, uncritical, or neutral for the risk involved with performing said transaction;
   second calculating means (30) for calculating a risk density for each non-neutral risk parameter;
   aggregating means (30) for aggregating the risk densities of non-neutral risk parameters of at least one predefined set of risk parameters to determine a common risk density of said set of risk parameters;
   third calculating means (30) for generating an overall risk probability, based on predetermined weights and partial risk probabilities for said sets of risk parameters;
   fourth calculating means (30) for calculating a net utilisation as the difference between an utilisation in said transaction and a value of collaterals available for said transaction at a certain point in time; and
   fifth calculating means (30) for calculating said risk indicator value as the product of said net utilisation and said overall risk probability.

2. The system of one of the preceding claims wherein said second calculating means (30) comprise integrator means, integrating a risk density function using said evaluation value of the respective non-neutral risk parameter.

3. The system of one of the preceding claims wherein said third calculating means comprise integration means (30) for generating a partial risk probability from the common risk density, for each of a number of risk categories, and multiplication means for multiplying said partial risk probability with an assigned category weight, for each of said categories, to determine the overall risk probability as a weighted average value of said partial risk probabilities.

4. The system of one of the proceeding claims, further comprising second reading means (25) for reading threshold values a, b and stretching parameters c, d of the evaluation function ; and
   first combining means for deriving said evaluation function for each of said risk parameters based on said threshold values and stretching parameters .

5. The system of claim 4, further comprising second combining means for deriving said risk density function for each risk parameter which has been determined to be not neutral.

6. The system of one of the preceding claims, comprising a second data base means (36) for storing said risk indicator value.

7. The system of one of the preceding claims, comprising each second input means (24) for inputting predetermined threshold values a, b and stretching parameters c, d from an external source for determining said evaluation functions.

8. The system of claim 5, comprising third data base means (20) for storing said threshold values a, b and stretching parameters c, d .

9. The system of one of the preceding claims, wherein said client input data comprise personal client data, historical account data and historical credit data of the client, wherein the historical data is assembled in said first database means in a number of files corresponding to a certain number of past months, in particular up to 36, for each of a number of data types.

10. A method of using an electronic data processing system for automatically determining a risk indicator value based on a number of risk parameters, for evaluating a risk involved with performing a transaction between a client and a transaction provider in said data processing system, the data processing system comprising:

   first input means for inputting client input data relating to said client;
   first data base means for storing said client input data;
   computing means comprising read/write means for reading said client input data from said first data base means, and calculating said risk indicator value;
   output means for outputting said risk indicator value;
   the method comprising the steps of:

   - collecting and inputting into said first data base means client input data;
   - assembling and storing said client input data in a predetermined number of client input data files in said first data base means;
   - reading client input data from at least one of said client input data files of said first data base means into said computing means;
   - determining risk parameter values (x) for a predetermined number of predefined risk parameters from said client input data;
   - determining an evaluation function for each of said risk parameters;
   - evaluating each risk parameter using the associated evaluation function to determine an evaluation value of said risk parameter;
   - comparing each evaluation value with at least one threshold value to determine whether the associated risk parameter is critical, uncritical, or neutral for the risk involved with performing said transaction;
   - determining a risk density function for each risk parameter which has been determined to be not neutral;
   - aggregating the risk densities of at least one predefined set of risk parameters to a common risk density to determine a partial risk probability for said set of risk parameters;
   - determining a weight for said set of risk parameters.

- generating an overall risk probability, based on said determined risk weights and partial risk probabilities for each set of risk parameters;
- calculating a net utilisation as the difference between a utilisation in said transaction and a value of collaterals available for said transaction at a certain point in time; and
- calculating said risk indicator value as the product of said net utilisation and said overall risk probability.

11. The method of claim 10, wherein
said step of aggregating comprises separately aggregating the risk densities of non-neutral risk parameters of a number of sets of risk parameters to determine a partial risk probability for each of said sets.

12. The method of claim 11, wherein
a weighted average value of all said partial risk probabilities is generated to determine an overall risk probability for calculating said risk indicator value.

13. The method of one of the preceding claims 10 - 12, wherein the risk indicator value is output to second data base means for storing said risk indicator value.

14. The method of one of the preceding claims 10 - 13, wherein said evaluation function for each of said risk parameters is specifically determined.

15. The method of claim 14, wherein said threshold values and stretching parameters are input into the data processing system from an external source.

16. The method of one of the preceding claims 10 - 15, wherein said client input data comprise personal client data, historical account data and historical credit data of the client, wherein the historical data is assembled in a number of files corresponding to up to 36 past months for each of a number of data types.

17. The method of one of the preceding claims 10 - 16, wherein said amount claimed in said transaction and said value of collaterals relate to respective amounts of monetary units .

18. The method of one of the preceding claims 10 - 17, wherein the risk probability is expressed as a real number between 0 and 1, inclusive, and the risk indicator value is a non-negative real number.

19. The method of one of the preceding claims 10 - 18, wherein the risk indicator values of a group of clients are aggregated to form a higher level risk indicator value.

20. The method of one of the preceding claims 10-19 wherein each set of risk parameters corresponds to one category of client-related values.

21. The method of one of the preceding claims 10-20 wherein client input data are read from each client input data file by a single access to said file.

22. Computer program product including program code for performing the method of one of claims 10-21 when run on a data processing device.

**Figure 1: The CRI Components**

**Figure 2: Determining risk probability**

*risk indicator value*

$2^{nd}$ processing stage

*risk criteria*

$1^{st}$ processing stage

*risk parameter*

risk probability

$(P_1, W_1)$   $(P_2, W_2)$   $(P_3, W_3)$   $(P_4, W_4)$

accounting (PC/CC´)

credit history (PC/CC)

economical situation / balance sheet data

personal situation / management information

$P_i$: partial risk probability for risk category i

$W_i$: Weight for risk category i

**Figure 3: Illustration of risk parameter aggregation per risk category**

**Fig. 3a: Graph of evaluation function F**

Legend:

U – uncritical

N – neutral

C – critical

a, b – threshold values

**Fig. 3b: Scale for assessment of evaluation value of risk parameter**

| U | N | C |
|---|---|---|

0   1   2   3   4   5   6   7   8   9
10

Legend:

U – uncritical

N – neutral

C – critical

**Figure 3c: Risk density for one risk parameter**

**Figure 4. Illustration of Credit Risk Indicator calculation**

1 Weight expressing significance of respective risk category. Weight is the product of one independent variable (e.g., general significance of respective risk category) and one dependent variable (i.e., number of critical parameters within the risk category)

2 Net Utilization considers both the utilization and the value of collaterals posted at a certain point in time

# Fig. 5: CRI Technical Architecture

**Transformation** — 12

- Source-systems
- Operational Data Store (ODS) — 22
- 10

read → Filter** — 14 → Collect & prepare historical data — 16 → write → CRI Input Data — 18

Treshold values & stretching parameters — 20

read a,b,c,d

24 → load → Treshold values & stretching parameters (XML-Interface)

25 → read

**Processing** — 26

$\sum$ — 28
Calculate x
Calculate F(x)
Calculate e,f,g
**parallelism***

→ store in memory →

$\int CRI$ — 30
Calculate P1, P2, P3, P4
Risk Probability
Net utilization
CRI
**parallelism***

write →
Switch for
- no printout
- only relevant parameters
- all parameters

Debug & Verification Information
(for debugging and testing only!) — 32
→ Database - Load (only when needed) →
Verification & Back testing Information — 34

35 → write → CRI Results

36

Database Loader
load load load
**parallelism***
CRI Results
**partitioning***

* for enhanced
** filters out only customers with a credit used

EP 1 361 526 A1

**Figure 6a:**

*119*

Compute expectation for risk category

Partial risk probability Pi (CRI Results Table) *120*

N, FE (CRI Input Data) *121*

Compute weight Wi for risk category i *122*

Wi (Memory) *123*

Last risk category? *124* no

Go to next risk category *125*

yes

Compute $\sum Pi \, Wi$ *126*

Risk Probability (CRI Results Table) *127*

Input Data for Utilization and Recovery Value of Collaterals Value *128*

Compute Net utilization for account *129*

Net Utilization (Memory) *130*

Compute CRI = Net utilization x Risk probability *131*

no

CRI at account level *132*

CRI Results Table *133*

yes

## LEGEND:

Task

Decision box

Input Output

Flat file

N : Number of critical parameters in given `risk category`
FE : Fixed evaluation for given risk category
Wi : Weight for a given risk category i

## Figure 6b

35

**Fig. 7**

January

| Customer | Month 0 | Month 1 | Month 2 | Month 3 | Month ... |
|----------|---------|---------|---------|---------|-----------|
| A        | 100     | 200     | 300     | 400     | ...       |
| ...      |         |         |         |         |           |

February

| Customer | Month 0 | Month 1 | Month 2 | Month 3 | Month ... |
|----------|---------|---------|---------|---------|-----------|
| A        |         | 100     | 200     | 300     | ...       |
| ...      |         |         |         |         |           |

**Fig. 8**

**European Patent**
**Office**

**DECLARATION**

which under Rule 45 of the European Patent Convention
shall be considered, for the purposes of subsequent
proceedings, as the European search report

**Application Number**

EP 02 01 0474

| The Search Division considers that the present application, does not comply with the provisions of the EPC to such an extent that it is not possible to carry out a meaningful search into the state of the art on the basis of all claims<br><br>Reason: | **CLASSIFICATION OF THE APPLICATION (Int.Cl.7)**<br><br>G06F17/60 |
| --- | --- |
| The claims relate to subject matter excluded from patentability under Art. 52(2) and (3) EPC. Given that the claims are formulated in terms of such subject matter or merely specify commonplace features relating to its technological implementation, the search examiner could not establish any technical problem which might potentially have required an inventive step to overcome. Hence it was not possible to carry out a meaningful search into the state of the art (Rule 45 EPC). See also Guidelines Part B Chapter VIII, 1-6.<br><br>The applicant's attention is drawn to the fact that a search may be carried out during examination following a declaration of no search under Rule 45 EPC, should the problems which led to the declaration being issued be overcome (see EPC Guideline C-VI, 8.5).<br><br><div align="center">---<br>-----</div> | |

EPO FORM 1504 (P04C37)

| Place of search | Date | Examiner |
| --- | --- | --- |
| THE HAGUE | 2 July 2002 | van der Weiden, A |